# EUROPÄISCHE PATENTSCHRIFT

(11) **EP 0 538 600 B1**
(45) Veröffentlichungstag und Bekanntmachung des Hinweises auf die Patenterteilung: **30.11.1994**
(21) Anmeldenummer: 92115116.3
(22) Anmeldetag: 04.09.1992
(51) Int. Cl.: B60T 8/48

(54) **Verfahren zum Beschleunigen des Bremseneingriffs im Antriebsschlupfregelbetrieb und hydraulische Bremsanlage zur Durchführung des Verfahrens**
Method of speeding brake intervention in a traction control operation and a hydraulic brake system for carrying out the method
Procédé pour accélerer l'intervention de freinage dans le mode de régulation d'antipatinage au démarrage et un système de freinage hydraulique pour la

(30) Priorität: 24.10.1991 DE 4135062
(43) Veröffentlichungstag der Anmeldung: 28.04.1993
(73) Patentinhaber: ROBERT BOSCH GMBH, 70442 Stuttgart (DE)
(72) Erfinder: Maisch, Wolfgang, W-7141 Schwieberdingen (DE)

(56) Entgegenhaltungen:
- EP-A- 0 305 950
- DE-A- 3 629 564
- DE-C- 4 009 640
- FR-A- 2 626 230
- FR-A- 2 636 575
- GB-A- 2 119 883
- GB-A- 2 239 913

## Beschreibung

### Stand der Technik

Die Erfindung geht aus von einem Verfahren zum Beschleunigen des Bremseneingriffs im Antriebsschlupfregelbetrieb einer hydraulischen Bremsanlage für Kraftfahrzeuge nach der Gattung des Anspruchs 1 und einer hydraulischen Bremsanlage für Kraftfahrzeuge mit einer Antriebsschlupfregeleinrichtung nach der Gattung des Anspruchs 4.

Nach dem Prioritätstag der Patentanmeldung veröffentlichte hydraulische Bremsanlagen mit Antriebsschlupfregeleinrichtungen gemäß den Dokumenten DE-A-4 107 978 und DE-U-9 102 352.1 haben wenigstens eine selbstansaugende Pumpe zum Ansaugen von Druckmittel durch eine Ansaugleitung und ein in der Ansaugleitung angeordnetes normalerweise geschlossenes Ladeventil und/oder durch ein wenigstens einer Radbremse zugeordnetes Unterdruckschutzventil und ein Absperrventil zum Bereitstellen von Drücken zur Durchführung von Antriebsschlupfregelbetrieb. Weil das Druckmittel bei tiefen Temperaturen eine hohe Viskosität hat, können bei tiefen Temperaturen mittels der Pumpen in der Anfangsphase nur nachteilig langsame Bremseneingriffe im Antriebsschlupfregelbetrieb erreicht werden. Deshalb wurde vorgeschlagen, in diesen hydraulischen Bremsanlagen das den Pumpen zuzuführende Druckmittel beispielsweise bei unter -5° C liegenden Umgebungstemperaturen zu erwärmen, so daß die Viskosität des Druckmittels niedriger wird. Dies erfolgt in dem einen Fall durch mehrfaches Hindurchpumpen des Druckmittels durch ein im Antriebsschlupfregelbetrieb wirksames Druckbegrenzungsventil und in dem anderen Fall durch elektrisches Erwärmen der Ansaugleitung, die von einem Vorratsbehälter zur Pumpe führt. Infolge unvermeidbar stattfindender Abkühlungen der Antriebsschlupfregeleinrichtung oder infolge Von starkem Absinken der Umgebungstemperatur zieht sich das in diesen Hohlräumen eingesperrte Druckmittel stärker als die Hohlräume zusammen. Dabei entstehen im Druckmittel Unterdrücke, so daß das Druckmittel ggf. Gasbläschen ausscheidet. Insbesondere wenn solche Gasbläschen sich gegebenenfalls im Verlauf von Stunden zu größeren Blasen zusammenschließen, stören sie Pumpvorgänge mit der Folge von nachteilig langsamen Bremseneingriffen im Antriebsschlupfregelbetrieb.

Durch das Dokument DE-C-4 009 640 gemäß dessen Figur 3 ist eine gattungsbildende hydraulische Bremsanlage bekannt, deren zum Antreiben einer Pumpe bestimmter Antriebsmotor anläßlich eines Antiblockierbetriebs oder eines Antriebsschlupfregelbetriebs mit elektrischem Strom versorgbar ist, wobei die Stromversorgung zumindest im Falle eines Antriebsschlupfregelbetriebs erst eine vorwählbare Zeitspanne nach Ablauf einer regelungsbedürftigen Situation zwecks Entleerung eines Pufferspeichers beendet wird. Ein lediglich dem Antriebsschlupfregelbetrieb dienendes elektrisch steuerbares Ladeventil wird nur im Antriebsschlupfregelbetrieb geöffnet.

Durch das Dokument GB-A-2 239 913 ist eine hydraulische Bremsanlage bekannt zur Durchführung von Bremsschlupf- und Antriebsschlupfregelung mit einer im Schlupfregelungsbetrieb einschaltbaren Pumpe. Die Pumpe ist eingebaut in eine Bremsleitung, die von einem Hauptbremszylinder zu einem Radbremszylinder führt, wobei eine Saugseite der Pumpe an den Hauptbremszylinder und eine Druckseite der Pumpe an den Radbremszylinder angeschlossen ist. Dadurch wird die Pumpe bei jedem normalen Bremsvorgang durchströmt. Dies ergibt den Vorteil, daß bei kalter, zäher Bremsflüssigkeit die Pumpleistung der Pumpe beschleunigt zustandekommt und dadurch die Regelgüte verbessert wird. Prinzipbedingt wird im Bremsschlupfregelbetrieb mittels eines Ventils die Saugseite der Pumpe vom Hauptbremszylinder getrennt, und ein Hochdruckspeicher an der Druckseite der Pumpe nimmt das von der Pumpe geförderte Druckmittel auf und steht anstelle des Hauptbremszylinders als Druckgeber zur Verfügung. Damit der Hochdruckspeicher nicht schon während einer normalen Bremsung Druckmittel aufnimmt, ist eine in ihn eingebaute Feder so stark vorgespannt, daß bei einem Druck, der noch nicht zum Blockieren eines Rades führt, kein Druckmittel vom Hochdruckspeicher aufgenommen wird. Ein solcher Hochdruckspeicher ist nachteilig teuer. Die stark vorgespannte Feder des Hochdruckspeichers hat zur Folge, daß die Pumpe während eines jeden Regelungsbetriebs einen sehr hohen Druck zu erzeugen hat und daher verstärkt Geräusch verursacht. Nachteilig ist ferner, daß bei jedem Bremsvorgang Rückschlagventile der Pumpe zu durchströmen sind, weil dies Strömungswiderstand verursacht und dadurch einen erwünscht schnellen Bremsdruckaufbau in dem Radbremszylinder behindert. Solche Rückschlagventile sind, damit die Pumpe ordnungsgemäß fördern kann, normalerweise mittels Federn belastet, so daß dann zusätzlich zum erhöhten Strömungswiderstand auch noch die Öffnungsdrücke der beiden Rückschlagventile zu überwinden sind. Dies hat dann den weiteren Nachteil, daß anläßlich einer Bremsung der Fahrer sofort einen Widerstand am Pedal fühlt, der jedoch kein Maß für den erzeugten Bremsdruck ist. Dies erschwert beispielsweise ein vorsichtiges Bremsen auf Glatteis und Schnee. Erkennbar ist also diese hydraulische Bremsanlage gewöhnungsbedürftig. Dies kann den weiteren Nachteil haben, daß bei nicht erfolgter Gewöhnung insbesondere in Notsituationen eine Bremswirkung nicht in dem Ausmaß auftritt, wie daß ein Fahrer aufgrund der Betätigung des Bremspedals und dessen Widerstand erwartet.

Es stellte sich die Aufgabe, eine gattungsgemäße hydraulische Bremsanlage, deren Pumpe also nicht in die Bremsleitung eingebaut ist und deshalb während einer normalen Bremsung nicht durchströmt wird, so zu verbessern, daß auch bei abgekühlter Bremsanlage die Pumpleistung der Pumpe beschleunigt zustandekommt für gewünscht schnelle Bremseneingriffe im Antriebsschlupfregelungsbetrieb, wodurch auch die Regelungsgüte gefördert wird.

### Vorteile der Erfindung

Das erfindungsgemäße Verfahren mit den kennzeichnenden Verfahrensschritten des Anspruchs 1 und die nach diesem Verfahren arbeitende hydraulische Bremsanlage mit den kennzeichnenden Merkmalen des Anspruchs 4 haben den Vorteil, daß infolge von Abkühlung in dem eingesperrten Druckmittel ggf. entstandene Gasbläschen und/oder Blasen fortgespült werden, so daß bei einem später beginnenden Antriebsschlupfregelbetrieb gewünscht schnelle Bremseneingriffe zustande kommen. Das Fortspülen der Gasbläschen und/oder der Blasen kann in Zeitabständen wiederholt werden, sofern keine Bremsenbetätigung und kein Antriebsschlupfregelbetrieb stattfinden.

Durch die in den Unteransprüchen aufgeführten Maßnahmen sind vorteilhafte Weiterbildungen und Verbesserungen des im Anspruch 1 angegebenen Verfahrens und der im Anspruch 4 angegebenen Bremsanlage möglich. Die in den Ansprüchen 2 und 5 angegebenen kennzeichnenden Merkmale verkürzen die Zeiten, in denen, durch Öffnen des Ladeventils, die selbstansaugende Pumpe fördern kann, mit dem Vorteil, daß die Dauer einer Störung durch lästiges Pumpengeräusch kürzer ist. Die kennzeichnenden Merkmale der Ansprüche 3 und 6 ergeben eine abermalige Verkürzung der Dauer, während der lästiges Pumpengeräusch entstehen könnte.

### Zeichnung

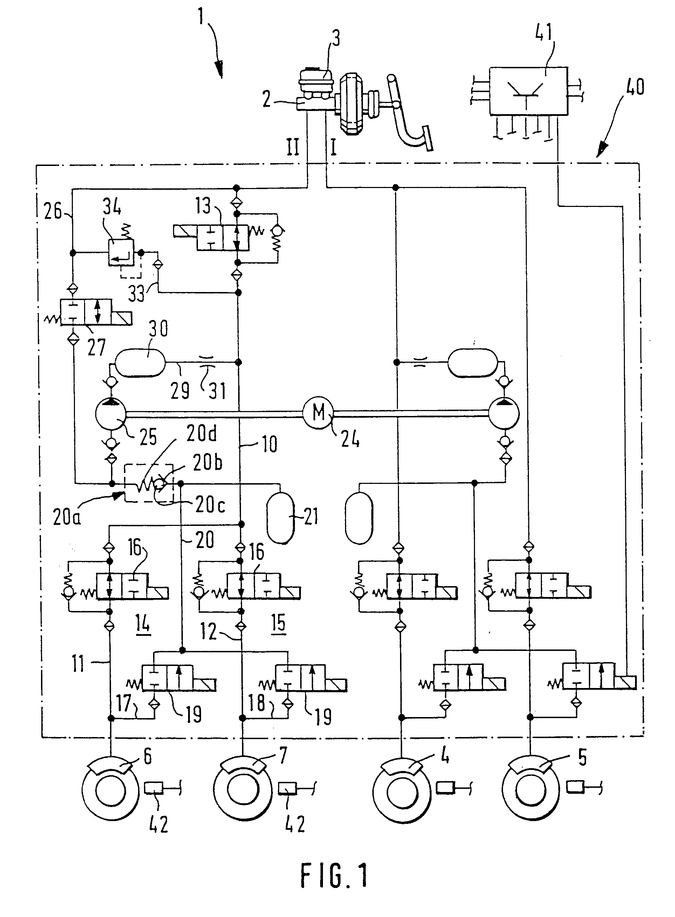

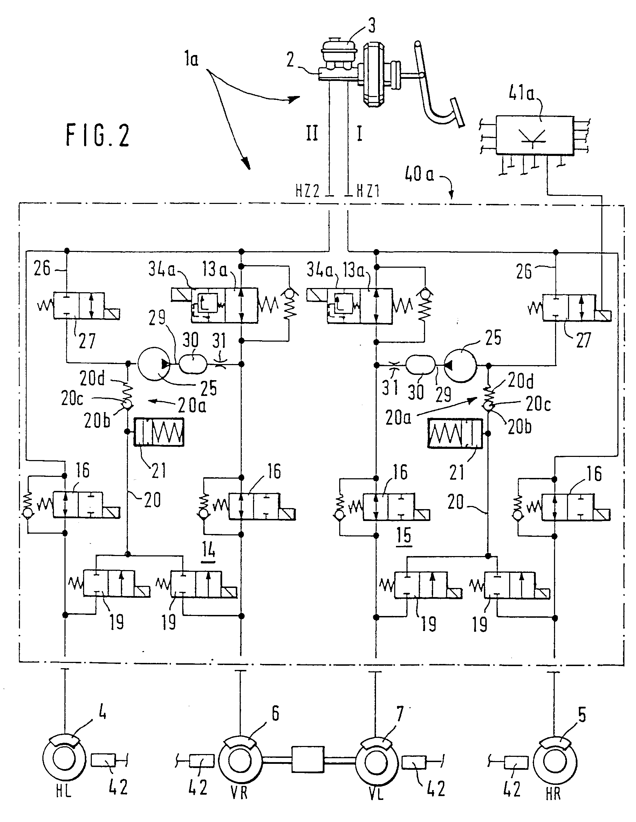

Zwei Ausführungsbeispiele der nach dem erfindungsgemäßen Verfahren arbeitenden und dafür eingerichteten Bremsanlagen mit Antriebsschlupfregeleinrichtung sind in der Zeichnung dargestellt. Es zeigen die Figur 1 ein erstes Ausführungsbeispiel der Erfindung mit einer TT-Bremskreisaufteilung, bei der also die Antriebsräder einer Antriebsachse zum selben. Bremskreis gehören, und Figur 2 ein zweites Ausführungsbeispiel mit K-Bremskreisaufteilung, bei der also die beiden zu einer Antriebsachse gehörenden Antriebsräder und deren Radbremsen auf zwei Bremskreise verteilt sind.

### Beschreibung der Ausführungsbeispiele

Die Bremsanlage 1 hat einen pedalbetätigbaren, zweikreisigen Hauptbremszylinder 2 mit einem Druckmittel-Vorratsbehälter 3. Ein erster Bremskreis I der Bremsanlage 1 ist mit Radbremsen 4, 5 nicht angetriebener Fahrzeugräder, z. B. der Vorderachse des Fahrzeugs, verbunden. An einen zweiten Bremskreis II sind die Radbremsen 6, 7 angetriebener Fahrzeugräder, z. B. der Hinterachse des Fahrzeugs, angeschlossen. Der im Zusammenhang mit der erfindungsgemäßen Lösung stehende Bremskreis II ist nachfolgend näher erläutert:
Der Bremskreis II hat eine vom Hauptbremszylinder 2 ausgehende Bremsleitung 10, welche in zwei zu den Radbremsen 6 bzw. 7 führende Bremsleitungen 11 und 12 verzweigt ist. In der Bremsleitung 10 ist hauptbremszylinderseitig ein Absperrventil 13 mit einer federbetätigten Durchlaßstellung und einer elektromagnetisch schaltberen Sperrstellung angeordnet. Radbremsseitig sind Drucksteuerventilanordungen 14, 15 für die Bremsdruckmodulation vorgesehen. Jede Ventilanordnung 14, 15 besitzt ein in der entsprechenden Bremsleitung 11, 12 angeordnetes, den Zufluß von Druckmittel zur Radbremse 6, 7 steuerndes Einlaßventil 16 mit einer federbetätigten Durchlaßstellung und einer elektromagnetisch schaltbaren Sperrstellung. Zwischen dem Einlaßventil 16 und und der Radbremse 6, 7 geht von der jeweilgen Bremsleitung 11, 12 je eine Rückführleitung 17, 18 aus. In den Rückführleitungen 17, 18 ist je ein Auslaßventil 19 der Drucksteuerventilanordnungen 14, 15 angeordnet. Das Auslaßventil 19 hat eine federbetätigte Sperrstellung und eine elektromagnetisch schaltbare Durchlaßstellung. Die Rückführleitungen 17 und 18 sind in einer Rückführleitung 20 vereinigt, an welche eine Speicherkammer 21 angeschlossen ist. In die Rückführleitung 20 ist ein Unterdruckschutzventil 20a eingebaut. Dieses ist nach Art eines Rückschlagventils ausgebildet und besitzt einen Ventilsitz 20b, einen Schließkörper 20c und eine Feder 20d. Das Unterdruckschutzventil 20a ist in Richtung zur angeschlossenen selbstansaugenden Pumpe 25 öffenbar. Die Feder 20d ist derart vorgespannt eingebaut, daß von der Pumpe erzeugbarer Unterdruck bei geöffneten Auslaßventilen 19 von den Radbremsen 6, 7 ferngehalten wird.

Ein elektrischer Antriebsmotor 24 treibt die Hochdruck erzeugende Pumpe 25 an. Die selbstansaugend ausgebildete Pumpe 25 ist mittels einer Ansaugleitung 26 mit der Bremsleitung 10 verbunden, und zwar zwischen dem Hauptbremszylinder2 und dem Absperrventil 13. In der Ausaugleitung 26 befindet sich ein Ladeventil 27 mit einer federbetätigten Sperrstellung und einer elektromagnetisch schaltbaren Durchlaßstellung. Ausgangsseitig ist die Pumpe 25 durch eine Förderleitung 29 mit der Bremsleitung 10 zwischen dem Absperrventil 13 und den Drucksteuerventilanordnungen 14, 15 verbunden. In der Förderleitung 29 sind eine Dämpferkammer 30 sowie eine Drossel 31 angeordnet.

Zwischen dem Anschluß der Förderleitung 29 und dem Absperrventil 13 geht von der Bremsleitung 10 eine Abströmleitung 33 aus, welche zu der Ansaugleitung 26 führt. Die Abströmleitung 33 ist an die Ansaugleitung 26 angeschlossen. In der Abströmleitung 33 befindet sich ein Druckbegrenzungsventil 34 mit einem Ansprechdruck von beispielsweise 100 bar.

Die Bremsanlage 1 ist somit mit einer Blockierschutz- und Antriebsschlupfregeleinrichtung 40 ausgestattet. Diese besitzt ein Steuergerät 41, mit dem Signale von das Drehverhalten der Fahrzeugräder erfassenden Drehzahlsensoren 42 auswertbar und in Schaltsignale für den Antriebsmotor 24 der Pumpe 25 sowie der diversen elektromagnetisch betätigbaren Ventile der Bremsanlage 1 umsetzbar sind. Die Einrichtung 40 wird aktiviert, wenn beim Bremsen bei wenigstens einem Fahrzeugrad Blockiergefahr besteht oder beim Anfahren und Beschleunigen wenigstens eines der Antriebsräder unzulässig großem Schlupf unterworfen ist.

Beim Auftreten von Antriebsschlupf schaltet das Steuergerät 41 das Absperrventil 13 in die Sperrstellung, das Ladeventil 27 in die Durchlaßstellung und den Antriebsmotor 24 der Pumpe 25 ein. Die Pumpe 25 saugt Druckmittel aus dem Vorratsbehälter 3 durch die Ansaugleitung 26 an und speist dieses Druckmittel durch die Förderleitung 29 in die Bremsleitung 10 ein. Durch entsprechende Ansteuerung der Einlaßventile 16 und der Auslaßventile 19 der Drucksteuerventilanordnungen 14, 15 wird der Bremsdruck in der Radbremse des schlupfenden Antriebsrades moduliert.

Das Steuergerät 41 ist in erfindungswesentlicher Weise zusätzlich noch so eingerichtet, daß es anläßlich einer Inbetriebnahme eines damit ausgestatten Fahrzeugs wenigstens einmal, vozugsweise in Zeitabständen wiederholt, den Antriebsmotor der Pumpe 25 kurzzeitig einschaltet und das Ladeventil 27 in die Durchlaßstellung steuert. Dies wird ggf. unterdrückt oder beendet, wenn eine Bremsenbetätigung begonnen wird oder automatisch ein Antriebsschlupfregelbetrieb einsetzt.

Wahlweise kann man hierbei das Ladeventil 27 öffnen, sobald und solang der Antriebsmotor 24 zur Funktionskontrolle beim Fahrzeugstart eingeschaltet ist. Dadurch erfolgt ein Transport des Druckmittels durch die Pumpe 25 und demgemäß ein Fortspülen von eingangs der Pumpe 25 befindlichen wegen Unterdrucks gegebenenfalls entstandenen Gasbläschen und/oder Blasen. Hierbei kann ab dem Öffnen des Ladeventils 27 eine störende Geräuschentwicklung stattfinden. Man könnte deshalb daran denken, den Antriebsmotor 25 schon abzuschalten, bevor er seine Normaldrehzahl erreicht. Dies hätte aber den Nachteil, daß beim Abschalten ein nachteilig hoher Abschaltstrom mittels eines Relaiskontakts oder dergleichen zu schalten wäre und daß die Kontrolle der Motorfunktion bei niedriger Drehzahl schwieriger wäre.

Deshalb ist es vorteilhaft, das Ladeventil 27 zunächst geschlossen zu halten und den Antriebsmotor 24 erst dann auszuschalten, wenn er seine Enddrehzahl erreicht. Beim Ausschalten des Antriebsmotors 24 oder zeitlich verzögert danach wird das Ladeventil 27 geöffnet, so daß die Pumpe 25 lediglich während wenigstens eines Teils des Auslaufs des Antriebsmotors 24 fördert und bei der dadurch niedrigeren Drehzahl und der restlichen Dauer bis zum Stillstand weniger Geräusch erzeugt. Vorteilhafterweise bleibt dabei das Absperrventil 13 offen, wodurch weniger Pumpgeräusch entsteht als beim Pumpen gegen den Öffnungsdruck des Druckbegrenzungsventils 34.

Das Wegspülen von Gasbläschen ist grundsätzlich auch möglich bei einer anderen als der voranstehend beschriebenen TT-Bremskreisaufteilung, die auch als Vorn-hinten-Bremskreisaufteilung bezeichnet wird. Deshalb zeigt die Figur 2 ein Ausführungsbeispiel einer Bremsanlage 1a mit K-Bremskreisaufteilung, auch Diagonalbremskreisaufteilung genannt, bei der beispielsweise je ein antreibbares Vorderrad je einem Bremskreis I bzw. II zugeordnet ist. Demgemäß besitzt jeder der beiden Bremskreise I und II eine selbstansaugend ausgebildete Pumpe 25. Die Drucksteuerventilanordungen 14, 15 für Radbremsen 6, 7 von antreibbaren Rädern sind sinngemäß auf die Bremskreise I und II verteilt. Es sind hier in jedem Bremskreis Ladeventile 27, Unterdruckschutzventile 20a und Absperrventile 13a sowie Druckbegrenzungsventile 34a angeordnet. Im dargestellten Beispiel sind die Druckbegrenzungsventile 34a in die Absperrventile 13a integriert. Ein Ausführungsbeispiel für eine solche Integration schlagt das nach dem Prioritätstag der Patentanmeldung veröffentlichte Dokument DE-A-4 102 626 vor. Das Steuergerät 41a ist so weitergebildet, daß es die zusätzlich im Bremskreis I angeordneten Ventile 13a und 27 steuern kann. Weil die Ventile der Bremsanlage 1a des Ausführungsbeispiels gemäß der Figur 2 grundsätzlich in gleichartiger Weise ansteuerbar sind wie die Ventile des Ausführungsbeispiels gemäß der Figur 1, erübrigt sich eine weitere Beschreibung des Steuergeräts 41a.

## Patentansprüche

1. Verfahren zum Beschleunigen des Bremseneingriffs im Antriebsschlupfregelbetrieb bei einer hydraulischen Bremsanlage für Kraftfahrzeuge mit einer Antriebsschlupfregeleinrichtung, bei der mittels einer Pumpe Druckmittel durch eine Ansaugleitung und ein in die Ansaugleitung eingebautes, in seiner Grundstellung geschlossenes Ladeventil ansaugbar und in eine zu wenigstens einer Radbremse führende, ein sperrbares Einlaßventil aufweisende Bremsleitung einspeisbar ist, wobei die Bremsleitung gegen einen Hauptbremszylinder absperrbar und Druckmittel von der Bremsleitung durch ein Druckbegrenzungsventil absteuerbar ist, gekennzeichnet durch die Verfahrensschritte:
- Anläßlich der Inbetriebsetzung des Fahrzeugs wird die Pumpe (25) wenigstens einmal für eine vorgewählte Zeitspanne angetrieben, und
- während zumindest eines Teils des Laufs der Pumpe (25) wird als Folge dieses Antriebs das in die Ansaugleitung (26) eingebaute und in der Grundstellung sperrende Ladeventil (27) eine Zeit lang geöffnet.

2. Verfahren nach Anspruch 1, gekennzeichnet durch den Verfahrensschritt:
- Das Ladeventil (27) wird dann kurzzeitig geöffnet, wenn ein Antriebsmotor (24) der Pumpe (25) abgeschaltet wird.

3. Verfahren nach Anspruch 1, gekennzeichnet durch den Verfahrensschritt:
- Das Ladeventil (27) wird nach dem Abschalten des Antriebsmotors (24) der Pumpe (25) verzögert geöffnet.

4. Hydraulische Bremsanlage zur Durchführung des Verfahrens gemäß Anspruch 1 für Kraftfahrzeuge mit einer Antriebsschlupfregeleinrichtung, bei der mit einer Pumpe (25) Druckmittel durch eine Ansaugleitung (26) und ein in die Ansaugleitung eingebautes, in seiner Grundstellung geschlossenes Ladeventil (27) ansaugbar und in eine zu wenigstens einer Radbremse (6, 7) führende, ein sperrbares Einlaßventil (16) aufweisende Bremsleitung (10) einspeisbar ist, wobei die Bremsleitung (10) gegen einen Hauptbremszylinder (2) absperrbar und Druckmittel von der Bremsleitung durch ein Druckbegrenzungsventil (34) absteuerbar ist und wobei zur Steuerung von Ventilen (13, 16, 19, 27) und einem Antriebsmotor (24) der Pumpe (25) ein Steuergerät (41) vorgesehen ist, wobei das Steuergerät eingerichtet ist
- zur vorübergehenden Stromversorgung des Antriebsmotors (24) der Pumpe (25) für wenigstens eine vorgewählte Zeitspanne und
- zum vorübergehenden Öffnen des Ladeventils (27) im Antriebsschlupfregelbetrieb während zumindest eines Teils der Zeit, in der der Antriebsmotor (24) als Folge der besagten Stromversorgung läuft, dadurch gekennzeichnet, daß das Steuergerät (41) eingerichtet ist,
- damit anläßlich der Inbetriebsetzung des Fahrzeugs der die Pumpe (25) antreibende Antriebsmotor (24) wenigstens einmal für eine vorgewählte Zeitspanne mit elektrischem Strom versorgt wird für einen Lauf der Pumpe (25) und
- damit während eines Teils des Laufs der Pumpe (25) das Ladeventil (27) vorübergehend geöffnet wird.

5. Hydraulische Bremsanlage nach Anspruch 4, dadurch gekennzeichnet, daß das Steuergerät (41, 41a) eingerichtet ist
- zum vorübergehenden Öffnen des Ladeventils (27) ab dem Zeitpunkt der Beendigung der Stromversorgung des Antriebsmotors (24).

6. Hydraulische Bremsanlage nach Anspruch 4, dadurch gekennzeichnet, daß das Steuergerät (41, 41a) eingerichtet ist
- zum vorübergehenden Öffnen des Ladeventils (27) zeitverzögert nach Beendigung der Stromversorgung des Antriebsmotors (24).

## Claims

1. Method for accelerating the brake intervention in drive-slip control operation in a hydraulic brake system for motor vehicles with a drive-slip control device in which, by means of a pump, pressure medium can be admitted through an admission conduit and a charging valve, which is installed in the admission conduit and is closed in its basic position, and can be fed into a brake conduit, which leads to at least one wheel brake and has an inlet valve which can be shut off, it being possible to shut off the brake conduit from a main brake cylinder and to spill pressure medium from the brake conduit through a pressure-limiting valve, characterized by the following method steps:
- When the vehicle is put into operation, the pump (25) is driven at least once for a pre-selected interval of time, and
- during at least a part of the time when the pump (25) is running, the charging valve (27), which is installed in the admission conduit (26) and is shut off in the basic position, is opened for a period of time as a consequence of this drive.

2. Method according to Claim 1, characterized by the method step:
- The charging valve (27) is opened briefly when a drive motor (24) of the pump (25) is switched off.

3. Method according to Claim 1, characterized by the method step:
- The charging valve (27) is opened with a delay after the drive motor (24) of the pump (25) is switched off.

4. Hydraulic brake system, for carrying out the method according to Claim 1, for motor vehicles with a drive-slip control device, in which, by means of a pump (25), pressure medium can be admitted through an admission conduit (26) and a charging valve (27), which is installed in the admission conduit and is closed in its basic position, and can be fed into a brake conduit (10), which leads to at least one wheel brake (6, 7) and has an inlet valve (16) which can be shut off, it being possible to shut off the brake conduit (10) from a main brake cylinder (2) and to spill pressure medium from the brake conduit through a pressure-limiting valve (34), a control unit (41) being provided for controlling the valves (13, 16, 19, 27) and a drive motor (24) of the pump (25), the control unit being equipped
- for the temporary supply of electricity to the drive motor (24) of the pump (25) for at least a preselected interval of time and
- for the temporary opening of the charging valve (27) in drive-slip control operation during at least part of the time in which the drive motor (24) is running as a consequence of the electricity supply quoted, characterized in that the control unit (41) is equipped
- so that while the vehicle is being put into operation, the drive motor (24) driving the pump (25) is supplied with electrical current for a run of the pump (25) at least once for a pre-selected interval of time and
- the charging valve (27) is, by this means, temporarily opened during a part of the time the pump (25) is running.

5. Hydraulic brake system according to Claim 4, characterized in that the control unit (41, 41a) is equipped
- for the temporary opening of the charging valve (27) from the instant when the electricity supply to the drive motor (24) is ended.

6. Hydraulic brake system according to Claim 4, characterized in that the control unit (41, 41a) is equipped
- for the temporary opening of the charging valve (27) with a delay after the electricity supply to the drive motor (24) has been ended.

## Revendications

1. Procédé pour accélérer l'entrée en action des freins au cours du fonctionnement de l'antipatinage d'une installation de freinage de véhicules automobiles équipés de dispositifs d'antipatinage de motricité, dans lequel une pompe peut aspirer un moyen de pression par une canalisation contenant une soupape de charge fermée au repos, et l'envoyer dans une canalisation reliée à au moins un frein de roue et contenant une soupape d'admission qui peut être fermée, cette canalisation de freinage pouvant être isolée par rapport à un maître-cylindre et le moyen de pression pouvant être dévié de cette conduite à travers une soupape de limitation de pression, procédé caractérisé par les étapes suivantes :
- après la mise en route du véhicule, la pompe (25) est entraînée au moins une fois pendant un temps donné, et
- pendant au moins une partie du fonctionnement de la pompe (25) faisant suite à l'entraînement précédent, la soupape de charge (27) montée sur la canalisation d'aspiration (26) et normalement fermée, est ouverte pendant un certain temps.

2. Procédé selon la revendication 1, caractérisé par l'étape ci-dessous :
- la soupape de charge (27) est ouverte pendant un court instant, lorsque le moteur (24) entraînant la pompe (25) est coupé.

3. Procédé selon la revendication 1, caractérisé par l'étape ci-dessous :
- la soupape de charge (27), après la coupure du moteur (24) de la pompe (25), a son ouverture retardée.

4. Installation hydraulique de freinage de véhicules automobiles pour la mise en oeuvre du procédé de la revendication 1, équipée d'un dispositif antipatinage de motricité et comportant :
- une conduite (26) servant à l'aspiration d'un fluide de pression par une pompe (25) et contenant une soupape de charge (27) fermée au repos.
- une conduite de freinage (10) reliée à au moins un frein de roue (6, 7) et qui contient une soupape d'alimentation (16) obturable servant à relier la conduite (10) à un maître cylindre (2) ou à l'en isoler.
- une soupape de limitation de pression (34), commandée, servant à dévier le fluide de la canalisation de freinage (10).
- un dispositif (41) servant à commander les soupapes (13, 16, 19, 27) ainsi que la pompe (25) et pouvant assurer l'alimentation temporaire du moteur (24) entraînant la pompe (25) pendant au moins un instant donné, ainsi que l'ouverture temporaire de la soupape de charge (27), lorsque l'antipatinage est en service, pendant au moins une partie du temps de rotation du moteur (24) alimenté comme indiqué ci-dessus,
installation caractérisée en ce que le dispositif de commande (41) est réglé pour qu'après la mise en route du véhicule, le moteur (24) entraînant la pompe (25) soit alimenté au moins une fois pendant une durée donnée et que, pendant une partie du temps de rotation de la pompe (25), la soupape de charge (27) soit ouverte.

5. Installation hydraulique de freinage selon la revendication 4, caractérisée en ce que l'appareil de commande (41, 41a) est réglé pour provoquer l'ouverture momentanée de la soupape de charge (27) à partir de la coupure de l'alimentation du moteur d'entraînement.

6. Installation hydraulique de freinage selon la revendication 4, caractérisée en ce que l'appareil de commande est réglé pour provoquer l'ouverture momentanée de la soupape de charge (27) avec un certain retard par rapport à l'instant de la coupure de l'alimentation du moteur d'entraînement.
